# EUROPEAN PATENT APPLICATION

(11) **EP 4 789 844 A1**
(43) Date of publication of application: **12.08.2026**
(21) Application number: 26157384.4
(22) Date of filing: 09.02.2026
(51) Int. Cl.: B29C 55/02, B29C 55/16

(54) **CURVED ROLLER PROCESS FOR PRE-STRETCHED FILM**

(30) Priority: 10.02.2025 US 202563756543 P
(71) Applicant: Tesla, Inc., Austin, TX 78725 (US)
(72) Inventor: GOUGOUSSIS, Christos, Austin, 78725 (US)
(74) Representative: Bryn-Jacobsen, Caelia

(57) **Abstract**

A system for pre-stretching film includes a starting cylindrical roll (202) of film, an intermediate roller (204) to receive film (208) from the starting cylindrical roll (202) of film and stretch the film (208) as it passes over the intermediate roller (204), and provide the film to a final non-cylindrical roll (206) that stores the film in a pre-stretched condition. The first intermediate roller (204) has a greater radius of curvature (i.e. less curvature) compared to the final non-cylindrical roll (206). Preferably, the starting cylindrical roll (202) and the final non-cylindrical roll (206) are detachable from the system.

Preferably, the pre-stretched film (208) is pre-stretched to fit on a curved surface, such as a vehicle window where it may serve to provide window tinting to block ultraviolet rays.

## Description

### PRIORITY CLAIM

This application claims the benefit of U.S. Provisional Patent Application Serial No. 63/756,543, filed on February 10, 2025, titled "CURVED ROLLER PROCESS FOR PRE-STRETCHED FILM".

### TECHNICAL FIELD

The present disclosure generally relates to automotive materials. In particular, the present disclosure relates to techniques for pre-stretching automotive film.

### BACKGROUND

The use of automotive film is widespread in the automotive industry because of the various benefits automotive film offers. For example, automotive film blocks harmful ultraviolet rays from entering a vehicle, thereby protecting the people in the vehicle as well as the interior materials of the vehicle, such as leather and upholstery. Additionally, automotive film reduces solar heat from entering the vehicle, thereby maintaining a more comfortable interior temperature and improving energy efficiency of the vehicle climate control system. Furthermore, automotive film reduces glare from sunlight and headlights, thereby improving visibility for drivers. At the same time, automotive film obscures visibility from outside, thereby providing privacy for people in the vehicle. Indeed, the use of automotive film may offer many convenient features in the automotive industry, and these features may grow as automotive film technology improves. However, many aspects of automotive film have not improved in kind, and as a result, the use of automotive film in the automotive industry faces various technical challenges.

### BRIEF DESCRIPTION OF THE DRAWINGS

The figures, which may use like numerals to reference the same or similar elements, depict various examples of the present disclosure for purposes of illustration and are not to be considered as limiting in scope. One skilled in the art will readily recognize that additional examples are possible without departing from the principles of the present disclosure.
FIG. 1 is a diagram of film applied to a curved surface, according to some examples.
FIG. 2 is a diagram of a system for pre-stretching film, according to some examples.
FIG. 3 is a diagram of a system for pre-stretching film, according to some examples.
FIG. 4 is a flow chart illustrating a method for pre-stretching film, according to some examples.
FIG. 5 is a block diagram of a machine in the form of a computer system, according to some examples, within which instructions may be executed for causing the machine to perform any one or more of the methodologies discussed herein.

### DETAILED DESCRIPTION

The application of film to vehicle windows may provide many benefits to the vehicle. However, the application of film faces technical challenges arising from the different curvatures of different vehicle windows. For example, when applying film to a curved surface, such as a vehicle window, the film may not precisely fit the curvature of the curved surface. As a result of an imprecise fit, the film wrinkles when applied to the curved surface. When wrinkled, the film is not only unsightly but also fails to effectively provide the benefits for which the film is applied. Therefore, wrinkled film can be a defect causing rework to a vehicle window to correct the wrinkle. Thus, the technical challenges arising when applying film to a curved surface cause inefficient use of production time and inefficient use of materials.

The present disclosure seeks to address the aforementioned technical problems by providing systems and methods for pre-stretching film for ready application to a curved surface. For example, a system for pre-stretching film includes an intermediate roller to receive film from a starting cylindrical roll of film, stretch the film as the film passes over the intermediate roller, and provide the film to a final non-cylindrical roll that stores the film in a pre-stretched condition. The pre-stretched film is stored on the final non-cylindrical roll, which is detachable from the system, until application of the pre-stretched film to a curved surface. Here, the pre-stretched film is pre-stretched to fit on the curved surface. Therefore, the pre-stretched film is readily applied to the curved surface while minimizing wrinkling.

Furthermore, the system for pre-stretching film can use a set of interchangeable and supplementary intermediate rollers of different curvature radii to facilitate the stretching of film to different target curvatures. For example, the system for pre-stretching film can stretch the film supplied by a starting cylindrical roll (e.g., film with no curvature) to fit on a final non-cylindrical roll of a target curvature by selecting an intermediate roller with a curvature radius between that of the starting cylindrical roll and the final non-cylindrical roll. By passing the film from the starting cylindrical roll, over the intermediate roller, and to the final non-cylindrical roll, the film is stretched by the intermediate roller and stored in a pre-stretched condition on the final non-cylindrical roll.

Curvature and curvature radius are inversely related. A smaller curvature radius corresponds to a larger curvature (e.g., a more curved surface), and a larger curvature radius corresponds to a smaller curvature (e.g., a flatter surface). For example, a first cylindrical roll with a smaller curvature radius than the curvature radius of a second cylindrical roll has a greater curvature (e.g., is more curved) than the second cylindrical roll. The second cylindrical roll, which has a larger curvature radius than the curvature radius of the first cylindrical roll, has a lower curvature (e.g., is less curved) than the first cylindrical roll. A component with an infinite curvature radius would have no curvature (e.g., be flat). For example, a cylindrical roll with no curvature would have a flat cylindrical surface.

In some examples, additional intermediate rollers are added to the system to facilitate the stretching of film. For example, the system for pre-stretching film can include a series of intermediate rollers of decreasing curvature radii (or increasing curvature) such that each intermediate roller has a curvature radius between the curvature radius of a preceding roller (or roll) and the curvature radius of a subsequent roller (or roll). In a system with two intermediate rollers, the film supplied by a starting cylindrical roll is passed to a first intermediate roller with a first curvature radius less than that of the starting cylindrical roll and greater than that of a second intermediate roller in the system. The film is passed from the first intermediate roller to the second intermediate roller, which has a second curvature radius less than the first curvature radius and greater than the curvature radius of the final non-cylindrical roll. By passing the film from the starting cylindrical roll over multiple intermediate rollers to the final non-cylindrical roll, the film is gradually stretched by the intermediate rollers and stored in a pre-stretched condition on the final non-cylindrical roll.

The cylindrical rolls, non-cylindrical rolls, and intermediate rollers described herein may be non-destructively detachable in that these components may be removed from a system and subsequently reattached or replaced without causing damage to the component, the system, or the film being processed. For example, a non-destructively detachable roll or roller can be disconnected from a mounting mechanism, holder, or drive system through reversible fastening means such as quick-release clamps, threaded connections, snap-fit mechanisms, magnetic couplings, or sliding rail systems to facilitate removal and reinstallation without cutting, breaking, or permanent deformation of a component. For example, the starting cylindrical roll may be removed from a holder when depleted of film and replaced with a new starting cylindrical roll without damaging the holder. The non-cylindrical roll may be removed when filled with pre-stretched film for storage and replaced with a new non-cylindrical roll for continued production.

In some examples, heating elements are used to facilitate the stretching of film. For example, the system for pre-stretching film includes a heating element that heats the film as it passes from the starting cylindrical roll, over the intermediate rollers, and to the final non-cylindrical roll. In some examples, the intermediate rollers include heating elements within them that heat the film as it passes over the intermediate rollers. Heating the film facilitates the gradual stretching of the film by the intermediate rollers.

To use the system for pre-stretching film, a film stored on a cylindrical roll is connected to the system. A final non-cylindrical roll can be selected based on a target curvature (e.g., a curvature based on a vehicle window that the film will be applied to). Intermediate rollers are selected based on the target curvature. The film is supplied from the cylindrical roll, passed over the intermediate rollers, and stored on the final non-cylindrical roll. As the film passes over the intermediate rollers, the film is stretched until it is in a pre-stretched condition with a curvature matching the target curvature. The film is stored on the final non-cylindrical roll in the pre-stretched condition, where it is ready to be applied to a curved surface (e.g., a vehicle window).

In the pre-stretched condition, the film is in a state of being deformed through mechanical stretching to conform to a non-cylindrical curvature. In the pre-stretched condition, the film maintains the non-cylindrical curvature without continued application of an external force or heat. In some examples, film in a pre-stretched condition is stretched and deformed to between 20% and 100% of a target curvature corresponding to the curved surface to which the film will be applied. In some examples, the curvature at which the film is pre-stretched is based on a set of target curvatures corresponding to a set of curved surfaces to which the film will be applied. For example, the film may be pre-stretched to the lowest target curvature of the set of target curvatures, so the film may be applied to the curved surface corresponding to the lowest target curvature without additional stretching and may be applied to the curved surfaces corresponding to higher target curvatures of the set of target curvatures with reduced stretching.

In addition to the aforementioned improvements, the features of the system for pre-stretching film provide various improvements in the field of automotive materials. For example, by pre-stretching film and storing the film in a pre-stretched condition, the film is readily applied to a curved surface without further stretching or heat application. This improves the efficiency of film application in, for example, vehicle manufacturing processes. Furthermore, the system for pre-stretching film stretches film at various target curvatures. This improves the fit of the film to the surface where the film is to be applied. Further details related to the features of the system for pre-stretching film are provided below.

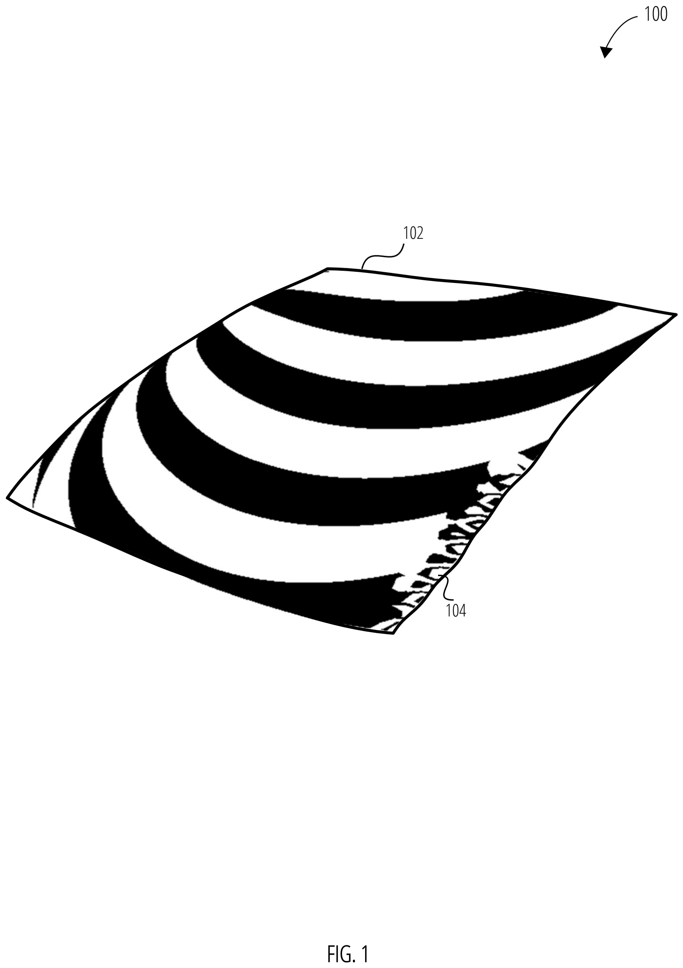

FIG. 1 is a diagram of an example 100 in which a film 102 is applied to a curved surface, according to some examples. As illustrated in FIG. 1, the film 102 has a wrinkled portion 104 resulting from the application of the film 102 to the curved surface. The wrinkled portion 104 is located near the edge of the curved surface, where the curvature of the curved surface results in a poor fit with the film 102. As further described herein, wrinkling is minimized during application of film by stretching the film and storing the film in a pre-stretched condition.

Automotive films, commonly used for window tinting, can be made from various materials, each offering distinct characteristics. The most prevalent material is polyethylene terephthalate (PET), a durable thermoplastic polymer known for its clarity and strength. Automotive films may also include, for example, non-reflective dye, metal particles, carbon particles, and ceramic particles to achieve different types of tinting. In general, many automotive films have a thickness between 0 and 1 millimeter. Due in part to these properties, automotive films are capable of being shaped through stretching and heating. The system for pre-stretching film described herein takes advantage of these properties to stretch film and store the film in a pre-stretched condition. While various examples herein involve stretching of automotive film, the system for pre-stretching films is not limited to stretching automotive film and may be utilized for various films of various properties.

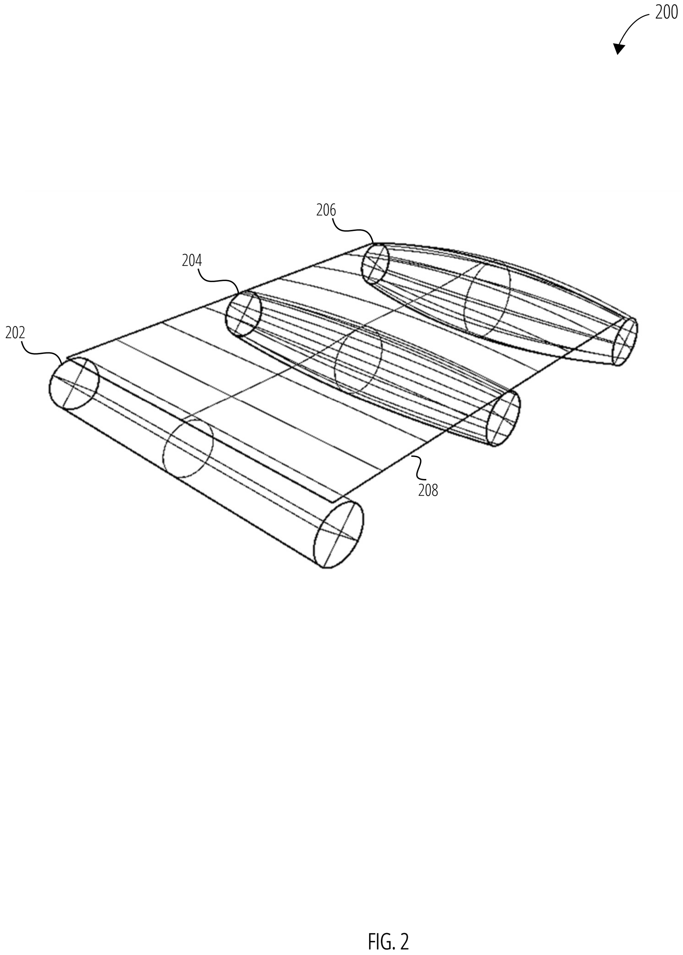

FIG. 2 is a diagram illustrating a system 200 for pre-stretching film, according to some examples. As illustrated in FIG. 2, the system 200 includes a starting cylindrical roll 202, an intermediate roller 204, and a final non-cylindrical roll 206. A film 208 is supplied by the starting cylindrical roll 202. The film 208 is fed from the starting cylindrical roll 202 to the intermediate roller 204, where the film 208 is stretched. The film 208 is further stretched as the film 208 is fed from the intermediate roller 204 to the final non-cylindrical roll 206. The final non-cylindrical roll 206 receives the film 208 and stores the film in a pre-stretched condition.

In some examples, the starting cylindrical roll 202 is detachable from the system 200. This allows for easy replacement and interchangeability of rolls to accommodate different production needs. For example, the starting cylindrical roll 202 is detached when depleted of the film 208 and replaced with a new roll of film to be processed. The new roll of film may supply film of various properties (e.g., materials, thickness) based on different production needs. In some examples, the final non-cylindrical roll 206 is detachable from the system 200. This is similarly advantageous in allowing for easy replacement and interchangeability of rolls to accommodate different production needs. For example, the final non-cylindrical roll 206 is detached when filled with the film 208, which is in a pre-stretched condition, and replaced with an empty roll to continue production. Different starting cylindrical rolls and different final non-cylindrical rolls with different curvature radii are interchanged to accommodate different production needs, such as pre-stretched film satisfying different curvature requirements. In some examples, curvature requirements for pre-stretched film range from 2 meters to 50 meters. For example, automotive windshields typically have curvatures between 2 meters and 10 meters. The starting cylindrical rolls and the final non-cylindrical rolls are interchanged to satisfy production runs for pre-stretched film, satisfying the various curvature requirements within this range.

In some examples, the intermediate roller 204 is interchanged with other intermediate rollers to accommodate stretching of the film 208 for final non-cylindrical rolls of different curvature radii. In general, the intermediate roller 204 has a curvature radius less than that of the starting cylindrical roll 202, which is flat, and greater than the curvature radius of the final non-cylindrical roll 206. In other words, the intermediate roller 204 has a curvature greater than that of the starting cylindrical roll 202 and less than that of the final non-cylindrical roll 206. In some examples, the curvature radius of the intermediate roller 204 is, for example, a multiple (e.g., 2x, 3x, 4x) of the curvature radius of the final non-cylindrical roll 206 or, for example, a predetermined value (e.g., 2m, 3m, 4m, 5m) greater than the curvature radius of the final non-cylindrical roll 206. In some examples, the curvature radius of the intermediate roller 204 is selected so that the curvature of the intermediate roller 204 is a fraction (e.g., 1/2, 2/3, 3/4) of the curvature of the final non-cylindrical roll 206. With an appropriate curvature radius, the intermediate roller 204 facilitates a gradual stretching of the film 208 to fit the final non-cylindrical roll 206.

In some examples, the system 200 includes multiple intermediate rollers to facilitate the gradual stretching of the film 208. For example, an additional intermediate roller is added to the system 200, positioned between the intermediate roller 204 and the final non-cylindrical roll 206. The additional intermediate roller receives the film 208 from the intermediate roller 204 and provides the film 208 to the final non-cylindrical roll 206. The additional intermediate roller has a curvature radius less than the curvature radius of the intermediate roller 204 and greater than the curvature radius of the final non-cylindrical roll 206. In other words, the additional intermediate roller has a curvature greater than the curvature of the intermediate roller 204 and less than the curvature of the final non-cylindrical roll 206. This progressive arrangement of increasing curvature radii allows for gradual and controlled stretching of the film 208. Additional intermediate rollers may be added to the system 200 to facilitate a more gradual progression in curvature radii to the final non-cylindrical roll 206.

In some examples where the system 200 includes multiple intermediate rollers, the curvature radii of the intermediate rollers in the system 200 are multiples (e.g., 2x, 3x, 4x) of the curvature radius of the final non-cylindrical roll 206. In some examples, the curvature radii of the intermediate rollers are at predetermined values (e.g., 2m, 3m, 4m, 5m) greater than the curvature radius of the intermediate roller 204. In some examples, the curvature radii of the intermediate rollers are selected so that the curvatures of the intermediate rollers are fractions (e.g., 1/2, 2/3, 3/4) of the curvature of the final non-cylindrical roll 206. With appropriate curvature radii, the intermediate rollers facilitate the gradual stretching of the film 208 to fit the final non-cylindrical roll 206.

In some examples, the final non-cylindrical roll 206 has a curvature radius based on a target curvature. The target curvature may be, for example, a curvature of a curved surface on which the film 208 is to be applied, such as a vehicle window. The curvature radius of the final non-cylindrical roll 206 is selected so that the film 208 has a curvature between 20% and 100% of the target curvature. Stretching the film 208 to a curvature less than 100% of the target curvature allows for further stretching when applying the film 208. Stretching the film 208 to a curvature of about 100% of the target curvature allows for the film 208 to be applied without further stretching. In some examples, a target curvature is selected as a minimum curvature or an average curvature of the curvatures of a range of products to which the film 208 is to be applied. This allows the film 208 to be pre-stretched for improved application to the different products while avoiding the use of multiple rolls of film with different curvatures for each product.

Applying the film 208 to a curved surface after the film 208 is stretched is relatively easier than applying a non-stretched film to the curved surface. For example, prior to applying the film 208 to the curved surface, the curved surface is cleaned to facilitate the application of the film 208. The film 208 is cut to the size of the curved surface, often leaving a margin around the edges of the curved surface to avoid underfitting. A solution, which may include water and soap, is applied to the curved surface to facilitate adhesion of the film 208 to the curved surface. The film 208 is then applied to the curved surface, and any air or moisture trapped between the film 208 and the curved surface is pushed out towards the edges of the curved surface. The film 208 is then trimmed to fit the curved surface.

Application of the film 208 to a curved surface is facilitated, in some examples, by a film application machine. The film application machine includes a film unwinding system that feeds the film 208 onto the curved surface, which is secured by the film application machine. The film application machine includes a cutting mechanism that trims the film 208 to the size of the curved surface. The film application machine includes an alignment mechanism to align the film 208 to the curved surface, position the film 208 onto the curved surface, and secure the film 208 to the curved surface. The film application machine applies the film 208 to the curved surface using a roller assembly to remove air and moisture from between the film 208 and the curved surface. In some examples, the system 200 includes components of the film application machine to apply the film 208 to a curved surface after pre-stretching the film 208.

In some examples, the system 200 includes a controller to select the intermediate roller 204 from a set of intermediate rollers of different curvature radii. The controller makes this selection based on a target curvature for a particular film application. The intermediate roller 204 can be selected to apply an appropriate amount of stretch to the film 208 to pre-stretch the film 208 to the target curvature by the final non-cylindrical roll 206. For example, the controller can select the intermediate roller 204 to have a curvature radius that is 1.25x, 1.5x, 1.75x, 2x, or 3x the target curvature. In some examples, the system 200 includes a controller to add and remove intermediate rollers to the system 200. The controller adds and removes intermediate rollers based on a target curvature for a particular film application. The addition of intermediate rollers can provide for more gradual stretching of the film 208 and facilitate relatively higher target curvatures. For example, the controller adds a first intermediate roller to use with the intermediate roller 204 if the target curvature is within a first threshold curvature radius. The controller adds a second intermediate roller in addition to the first intermediate roller and the intermediate roller 204 if the target curvature radius is within a second threshold curvature radius smaller than the first threshold curvature radius. In some examples, intermediate rollers are added to facilitate pre-stretching the film 208 into complex shapes. For example, the controller selects the intermediate roller 204 to stretch a first portion of the film 208 and adds another intermediate roller to stretch a second portion of the film 208. In this example, heating equipment can be used with the intermediate roller 204 and the added intermediate roller and be positioned where the film 208 is stretched at the first portion by the intermediate roller 204 and where the film 208 is stretched at the second portion by the added intermediate roller. By automating the selection, addition, and removal of intermediate rollers, the system 200 provides flexibility in producing pre-stretched film of a variety of curvatures while maintaining precise control over the pre-stretching process.

The controller includes a processor and memory to execute roller selection logic based on input parameters, such as a target curvature radius, film material properties (e.g., film type, thickness, composition, thermal characteristics), production requirements, available rollers, and film specifications. For example, the controller may access a database storing information related to available intermediate rollers, including curvature radii, physical dimensions, heating capabilities, and compatibility with film materials. Based on the input parameters and the available intermediate rollers, the controller determines an appropriate roller configuration that includes one or more intermediate rollers for performing a pre-stretching operation.

In some examples, the controller implements a proportional selection algorithm in which the curvature radius of each selected intermediate roller is determined as a multiple of the target curvature radius. For example, if the target curvature radius is 6 meters, the controller may select a first intermediate roller with a curvature radius of 12 meters (e.g., 2x the target curvature), allowing for gradual stretching from the starting cylindrical roll to the final non-cylindrical roll. In some examples, the controller may apply predetermined multiplier values (e.g., 1.25x, 1.5x, 1.75x, 2x, or 3x). In some examples, the controller adjusts the multiplier value based on film thickness, with thicker films requiring larger multiplier values for more gradual stretching and thinner films accommodating smaller multiplier values for more rapid stretching.

In some examples, the controller implements a threshold-based algorithm for determining the number of intermediate rollers to use in a roller configuration. For example, the controller compares a target curvature radius against threshold values associated with the number of intermediate rollers to use in the roller configuration. If the target curvature radius is at least a first threshold value, the controller may determine that a single intermediate roller provides adequate stretching, and no additional intermediate rollers are added. If the target curvature radius is less than the first threshold value and at least a second threshold value, the controller may add a first additional intermediate roller positioned between the intermediate roller and the final non-cylindrical roll. If the target curvature radius is less than the second threshold value, the controller may add a first additional intermediate roller and a second additional intermediate roller, creating a series of progressive curvature transitions for gradually stretching the film.

In some examples, the controller controls the physical positioning and sequencing of intermediate rollers in a roller configuration. For example, when adding intermediate rollers, the controller determines the curvature radius for each added roller such that the curvature radii form a descending sequence from the starting cylindrical roll to the final non-cylindrical roll. In some examples, the controller calculates the curvature radii for the intermediate rollers using geometric progression, arithmetic progression, or custom algorithms based on film material properties and empirical stretching data. In some examples, the controller controls actuators or robotic positioning systems to select intermediate rollers and position the selected intermediate rollers at appropriate locations along the film path.

In some examples, the controller monitors the stretching operation and adjusts roller selection based on the stretching operation. For example, sensors positioned along the film path may capture sensor data indicative of various parameters associated with the stretching operation, such as film tension, temperature, uniformity, and defects (e.g., wrinkles, tears). The controller receives sensor data and compares the measured parameters against acceptable parameter ranges. If the sensor data indicates, for example, that the film tension is outside an acceptable range, the controller may determine that the selected intermediate roller has a curvature radius that is too small (e.g., the curvature is too high) for the stretching, and may select a different intermediate roller with a larger curvature radius for the stretching operation. If the sensor data indicates, for example, that the stretching operation results in wrinkling or insufficient stretching, the controller may determine that the selected intermediate roller has a curvature radius that is too high (e.g., the curvature is too low). The controller may determine, for example, that an additional intermediate roller is to be added to provide additional or more gradual stretching. In some examples, the controller stores sensor data and roller configurations to build a database of performance data related to stretching operations, which may be used to inform future roller selection determinations.

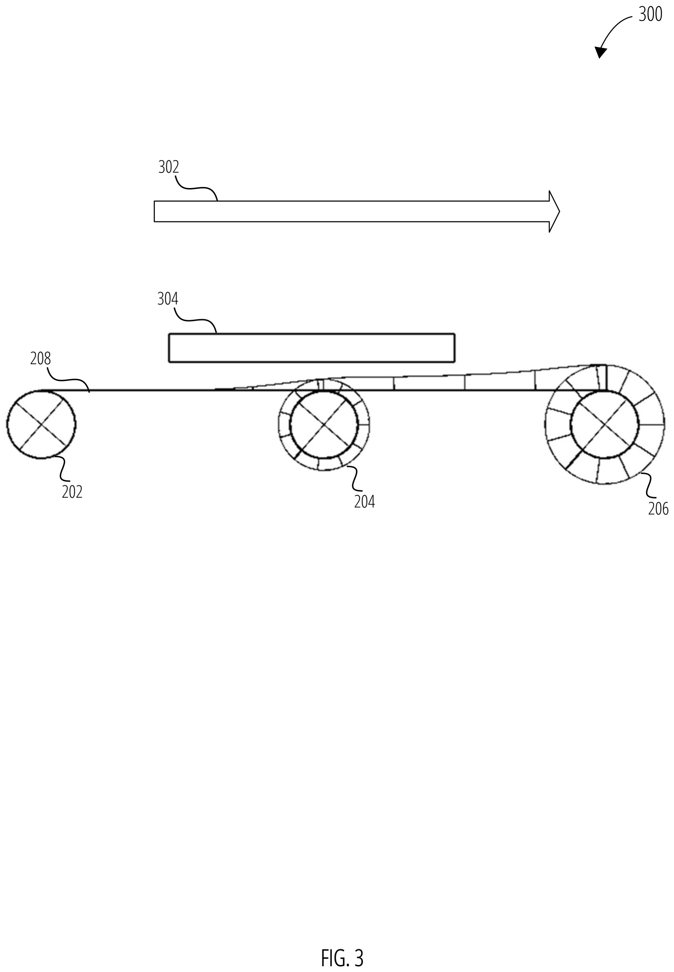

In some examples, the film 208 stored on the final non-cylindrical roll 206 is applied to a curved surface without additional heating. This provides production improvements by eliminating the need for heating equipment during the application of film. As the film 208, having been processed to be in a pre-stretched condition, maintains its curvature during storage on the final non-cylindrical roll 206. The film 208 is subsequently applied to, for example, vehicle windows at a normal, non-heated temperature. The film 208 can be heated when stretched to its pre-stretched condition using one or more heating elements, which may be integrated with or separate from the rollers, as further described with respect to FIG. 3.

To illustrate an example use of the system 200, the system 200 may be used to produce pre-stretched film for application to vehicle glass with a particular curvature radius of 6 meters. In this example, the final non-cylindrical roll 206 is selected to have a curvature radius of 6 meters, matching the target curvature of the vehicle glass to which the pre-stretched film is to be applied. The intermediate roller 204 is selected to have a curvature radius of 12 meters (e.g., 2x the target curvature) to accommodate a gradual stretching of film 208 supplied by the starting cylindrical roll 202. The film 208 is passed from the starting cylindrical roll 202 to the intermediate roller 204, where the film 208 is stretched by the intermediate roller 204. The film 208 is subsequently passed to the final non-cylindrical roll 206, where the film 208 is further stretched and stored on the final non-cylindrical roll 206. Here, the film 208 is stretched to the target curvature and is ready for application to the vehicle glass of the target curvature.

FIG. 3 is a diagram illustrating a system 300 for pre-stretching film, according to some examples. As illustrated in FIG. 3, the system 300 includes the starting cylindrical roll 202, the intermediate roller 204, and the final non-cylindrical roll 206 with a heating element 304. An arrow 302 illustrates the flow of the film 208 from the starting cylindrical roll 202, over the intermediate roller 204, to the final non-cylindrical roll 206. The heating element 304 applies heat to the film 208 as it travels across the intermediate roller 204, facilitating the stretching of the film 208. In general, temperatures between 80°C and 300°C may be used when applying heat to the film 208 as the film 208 is being stretched. Relatively higher temperatures (e.g., between 190°C and 300°C) can be used for relatively thicker films, and relatively lower (e.g., between 80°C and 190°C) temperatures can be used for relatively thinner films.

In some examples, the heating element 304 is a separate component, as illustrated in FIG. 3. While the heating element 304 is illustrated in FIG. 3 as one heating element, in some examples, multiple heating elements are used in the system 300. For example, multiple heating elements in a series provide heat to the film 208 throughout the stretching process from the starting cylindrical roll 202 to the final non-cylindrical roll 206. In some examples, heating elements are used in the rolls and rollers of the system 300. For example, a heating element is used in the starting cylindrical roll 202 (e.g., in the holder of the starting cylindrical roll 202) to heat the film 208 on the starting cylindrical roll 202. A heating element is used in the intermediate roller 204 to heat the film 208 as it passes over the intermediate roller 204. A heating element is used in the final non-cylindrical roll 206 (e.g., in the holder of the final non-cylindrical roll 206) to heat the film 208 as it is being stretched and stored on the final non-cylindrical roll. The heating elements work in conjunction with the curvature of the intermediate roller 204 and the curvature of the final non-cylindrical roll 206 to stretch the film 208 and maintain the pre-stretched condition of the film 208.

To illustrate an example use of the system 300, the system 300 may be used to produce pre-stretched film for application to vehicle glass with a curvature radius of 8m. In this example, the final non-cylindrical roll 206 is selected to have a curvature radius of 8m, matching the target curvature of the vehicle glass to which the pre-stretched film is to be applied. The intermediate roller 204 is selected to have a curvature radius of 16m (e.g., 2x the target curvature) to accommodate a gradual stretching of the film 208 supplied by the starting cylindrical roll 202. The heating element 304 applies heat to the film 208 to facilitate the gradual stretching of the film 208 as it travels from the starting cylindrical roll, over the intermediate roller 204, to the final non-cylindrical roll 206. Here, the film 208 is stretched to the target curvature and is ready for application to the vehicle glass of the target curvature.

In some examples, the heating element 304 is operatively connected to and controlled by a controller. The controller regulates the temperature, duration, and spatial distribution of heat applied to the film 208 during the pre-stretching process. The controller receives input parameters including film material properties (e.g., material type, thickness, and thermal characteristics), target curvature radius, production speed, and ambient environmental conditions. Based on these input parameters, the controller determines appropriate heating parameters to facilitate stretching of the film 208 while avoiding thermal damage or excessive softening that compromises film integrity. In some examples, the controller communicates with the heating element 304 via wired or wireless communication protocols to adjust heating output in real-time during the pre-stretching operation.

In some examples, the controller implements temperature control logic to vary heating based on various parameters, such as film material properties and stretching extent. For example, for PET films with thicknesses between 0.1 mm and 0.5 mm, the controller may set the heating element 304 to maintain a temperature between 80°C and 190°C. For thicker PET films with thicknesses between 0.5 mm and 1 mm, the controller may set the heating element 304 to maintain a higher temperature between 150°C and 250°C to provide appropriate heat to soften the films for stretching. In some examples, the controller may maintain a database of film materials and associated temperature ranges and adjust the heating element 304 based on the database.

In some examples, the controller implements a temperature profile that varies heating intensity across one or more heating elements to maintain different temperature ranges along the film path. For example, the controller may apply higher temperatures along the film path where the film approaches an intermediate roller, where stretching occurs, and reduce temperatures along the film path after the film passes over the intermediate roller to allow the film to cool and stabilize in its stretched configuration. The controller may implement a multizone heating strategy in which different heating elements operate at different temperatures or activation times.

In some examples, the controller controls the heat produced by a heating element based on sensor data. For example, temperature sensors along the film path provide real-time temperature data to the controller. The controller compares the temperature data with a target temperature and adjusts the heating element accordingly to maintain the target temperature. In some examples, sensor data may indicate a softening in tension or the presence of defects. The controller may adjust the heating element to increase or decrease heat based on sensor data. For example, a softening in tension may indicate excessive heat, and the controller may reduce heat accordingly.

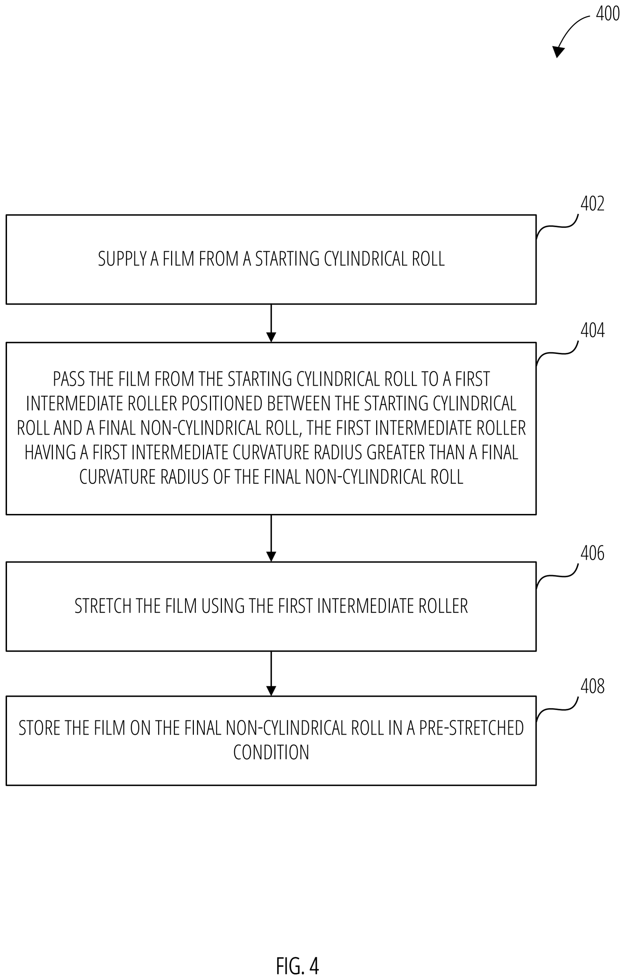

FIG. 4 is a flow chart illustrating a method 400 for pre-stretching film, according to some examples. The method 400 illustrates example operations that may be performed by the system 200 of FIG. 2 or the system 300 of FIG. 3. Although the method 400 depicts a particular sequence of operations, the sequence may be altered without departing from the scope of the present disclosure. For example, some of the operations depicted may be performed in parallel or in a different sequence that does not materially affect the function of the method 400.

At operation 402, the method 400 supplies a film from a starting cylindrical roll. For example, the starting cylindrical roll stores the film in an unstretched condition, with the film wound around the cylindrical core of the starting cylindrical roll. The starting cylindrical roll may be positioned at the beginning of a film path and configured to release the film at a controlled rate for feeding to one or more intermediate rollers. In some examples, the starting cylindrical roll is detachable, allowing for easy replacement when the roll is depleted or when switching to a different film material.

At operation 404, the method 400 passes the film from the starting cylindrical roll to a first intermediate roller positioned between the starting cylindrical roll and a final non-cylindrical roll, the first intermediate roller having a first intermediate curvature radius greater than a final curvature radius of the final non-cylindrical roll. For example, the first intermediate roller is selected from a set of available intermediate rollers based on the target curvature for a film application. The first intermediate roller may be selected, for example, by a controller based on the target curvature. As the film passes from the starting cylindrical roll to the curved first intermediate roller, the film begins to conform to the curvature of the first intermediate roller, initiating the stretching process.

At operation 406, the method 400 stretches the film using the first intermediate roller. For example, as the film passes over the curved surface of the first intermediate roller, the film is mechanically deformed to conform to the curvature of the first intermediate roller. The stretching is facilitated by the curvature of the first intermediate roller, which applies a distributed force across the width of the film to gradually shape the film to match the curvature of the first intermediate roller.

At operation 408, the method 400 stores the film on the final non-cylindrical roll in a pre-stretched condition. For example, after the film has been stretched by the first intermediate roller, the film is passed to the final non-cylindrical roll, where it is wound and stored. The final non-cylindrical roll has a curvature radius corresponding to a target curvature for the curved surface to which the film will ultimately be applied. As the film is wound onto the final non-cylindrical roll, the film maintains the curvature imparted by the stretching process, storing the film in a pre-stretched condition. In some examples, the film stored on the final non-cylindrical roll is ready for application to curved surfaces without additional stretching or heating during the application process. This pre-stretched condition reduces wrinkling when the film is applied to curved surfaces because the film has already been shaped to approximate the curvature of the target surface. In some examples, the final non-cylindrical roll is detachable, allowing it to be removed when filled with pre-stretched film and transported to a film application site, such as an automotive manufacturing facility. The detachable nature of the final non-cylindrical roll provides flexibility in production, allowing continuous operation by replacing filled rolls with empty rolls while maintaining the pre-stretching process.

Other technical features may be readily apparent to one skilled in the art from the figures, descriptions, and claims herein.

### EXAMPLES

Thus, some examples may include one or more of the following examples.

Example 1 is a system for pre-stretching film, comprising: a starting cylindrical roll configured to supply a film; a first intermediate roller positioned between the starting cylindrical roll and a final non-cylindrical roll, the first intermediate roller configured to receive the film from the starting cylindrical roll, the first intermediate roller having a first intermediate curvature radius greater than a final curvature radius of the final non-cylindrical roll; and a final non-cylindrical roll configured to receive the film.

In Example 2, the subject matter of Example 1 comprises a second intermediate roller positioned between the first intermediate roller and the final non-cylindrical roll, the second intermediate roller configured to receive the film from the first intermediate roller, the second intermediate roller having a second intermediate curvature radius greater than the final curvature radius of the final non-cylindrical roll and less than the first intermediate curvature radius.

In Example 3, the subject matter of Examples 1-2 comprises a heating element within the first intermediate roller configured to heat the film as it passes over the first intermediate roller.

In Example 4, the subject matter of Examples 1-3 comprises one or more heating elements configured to heat the starting cylindrical roll, the first intermediate roller, and the final non-cylindrical roll.

In Example 5, the subject matter of Examples 1-4 comprises wherein the starting cylindrical roll stores the film in an unstretched condition and is non-destructively detachable from the system, and wherein the final non-cylindrical roll stores the film in a pre-stretched condition and is non-destructively detachable from the system.

In Example 6, the subject matter of Examples 1-5 comprises wherein the final non-cylindrical roll is interchangeable with other non-cylindrical rollers having different final curvature radii and the first intermediate roller is interchangeable with other intermediate rollers having different intermediate curvature radii less than the final curvature radius.

In Example 7, the subject matter of Examples 1-6 comprises wherein the final non-cylindrical roll has a curvature radius based on a target curvature of a target surface to which the film is to be applied.

In Example 8, the subject matter of Examples 1-7 comprises a controller configured to select the first intermediate roller from a set of intermediate rollers of different curvature radii, the first intermediate roller selected based on a target curvature.

In Example 9, the subject matter of Example 8 comprises a controller to add a second intermediate roller from the set of intermediate rollers to the system, the second intermediate roller added based on the target curvature.

In Example 10, the subject matter of Examples 1-9 comprises wherein the film stored on the final non-cylindrical roll is applicable to a curved surface without application of heat.

Example 11 is a method for pre-stretching film comprising: supplying a film from a starting cylindrical roll; passing the film from the starting cylindrical roll to a first intermediate roller positioned between the starting cylindrical roll and a final non-cylindrical roll, the first intermediate roller having a first intermediate curvature radius greater than a final curvature radius of the final non-cylindrical roll; stretching the film using the first intermediate roller; and storing the film on the final non-cylindrical roll.

In Example 12, the subject matter of Example 11 comprises passing the film from the first intermediate roller to a second intermediate roller positioned between the first intermediate roller and the final non-cylindrical roll, the second intermediate roller having a second intermediate curvature radius greater than the final curvature radius of the final non-cylindrical roll and less than the first intermediate curvature radius of the first intermediate roller.

In Example 13, the subject matter of Examples 11-12 comprises heating at least one of: the starting cylindrical roll, the first intermediate roller, and the final non-cylindrical roll.

In Example 14, the subject matter of Examples 11-13 comprises removing the final non-cylindrical roll with the film stored thereon; and attaching a new non-cylindrical roll, the new non-cylindrical roll having a curvature radius of the final curvature radius.

In Example 15, the subject matter of Examples 11-14 comprises removing the starting cylindrical roll subsequent to completely passing the film to the first intermediate roller; and attaching a new cylindrical roll with a new film stored thereon.

In Example 16, the subject matter of Examples 11-15 comprises selecting the first intermediate roller from a set of intermediate rollers with the first intermediate curvature radius based on a target curvature.

In Example 17, the subject matter of Example 16 comprises selecting a second intermediate roller from the set of intermediate rollers with a second intermediate curvature radius based on the target curvature; and passing the film from the first intermediate roller to the second intermediate roller.

In Example 18, the subject matter of Examples 11-17 comprises selecting the final non-cylindrical roll based on a target curvature of a curved surface to which the film is to be applied.

In Example 19, the subject matter of Examples 11-18 comprises applying the film to a curved surface without application of heat.

Example 20 is a pre-stretched roll of film stored on a non-cylindrical roll, wherein the film is supplied by a cylindrical roll, and the film is stretched by an intermediate roller with an intermediate curvature less than a curvature of the non-cylindrical roll.

### EXAMPLE MACHINE

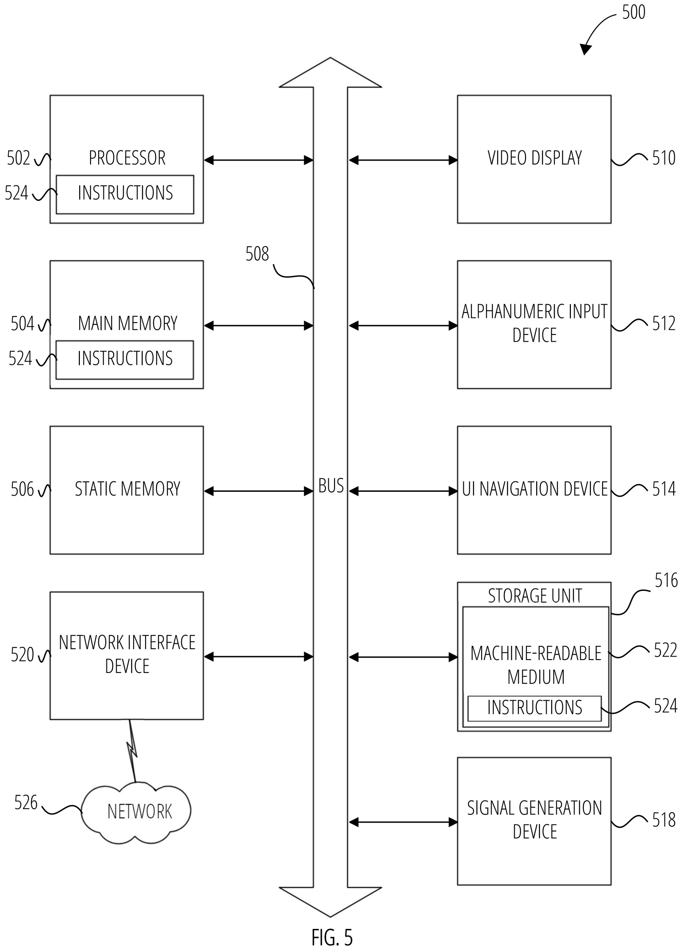

FIG. 5 is a block diagram of a machine in the example form of a computer system 500 within which instructions 524 may be executed for causing the machine to perform any one or more of the methodologies discussed herein. In some examples, the machine operates as a standalone device or may be connected (e.g., networked) to other machines. In a networked deployment, the machine may operate in the capacity of a server or a client machine in a server-client network environment, or as a peer machine in a peer-to-peer (or distributed) network environment. The machine may be a personal computer (PC), a tablet PC, a set-top box (STB), a personal digital assistant (PDA), a cellular telephone, a web appliance, a network router, switch, or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 500 includes a processor 502 (e.g., a central processing unit (CPU), a GPU, or both), a primary or main memory 504, and a static memory 506, which communicate with each other via a bus 508. The computer system 500 may further include a video display unit 510 (e.g., a liquid crystal display (LCD) or a cathode ray tube (CRT)). The computer system 500 also includes an alphanumeric input device 512 (e.g., a keyboard or a touch-sensitive display screen), a UI navigation (or cursor control) device 514 (e.g., a mouse), a storage unit 516, a signal generation device 518 (e.g., a speaker), and a network interface device 520.

A processor may refer to any one or more circuits or virtual circuits (e.g., a physical circuit emulated by logic executing on an actual processor) that manipulates data values according to control signals (e.g., commands, opcodes, machine code, control words, macroinstructions, etc.) and which produces corresponding output signals that are applied to operate a machine. A processor may be a multi-core processor having two or more independent processors (sometimes referred to as "cores") that may execute instructions contemporaneously. Multi-core processors may contain multiple computational cores on a single integrated circuit die, each of which can independently execute program instructions in parallel. A processor may be emulated in software, running on a physical processor, as a virtual processor or virtual circuit. The virtual processor may behave like an independent processor but is implemented in software rather than hardware.

The storage unit 516 includes a machine-readable medium 522 on which is stored one or more sets of data structures and instructions 524 (e.g., software) embodying or utilized by any one or more of the methodologies or functions described herein. The instructions 524 may also reside, completely or at least partially, within the main memory 504 or within the processor 502 during execution thereof by the computer system 500, with the main memory 504 and the processor 502 also each constituting a machine-readable medium 522.

While the machine-readable medium 522 is shown in accordance with some examples to be a single medium, the machine-readable medium may include a single medium or multiple media (e.g., a centralized or distributed database, or associated caches and servers) that store the one or more instructions 524 or data structures. A machine-readable medium may refer to any tangible medium that is capable of storing, encoding, or carrying instructions 524 for execution by the machine and that cause the machine to perform any one or more of the methodologies of the present disclosure, or that is capable of storing, encoding, or carrying data structures utilized by or associated with such instructions 524. For example, a machine-readable medium includes solid-state memories and optical and magnetic media. Specific examples of a machine-readable medium 522 include non-volatile memory, including by way of example semiconductor memory devices, e.g., erasable programmable read-only memory (EPROM), electrically erasable programmable read-only memory (EEPROM), and flash memory devices; magnetic disks such as internal hard disks and removable disks; magnetooptical disks; and compact disc read-only memory (CD-ROM) and digital versatile disc read-only memory (DVD-ROM) disks. A machine-readable medium is not a transmission medium.

The instructions 524 may further be transmitted or received over a communications network 526 using a transmission medium. The instructions 524 may be transmitted using the network interface device 520 and any one of a number of well-known transfer protocols (e.g., hypertext transport protocol (HTTP)). Examples of communication networks include a local area network (LAN), a wide area network (WAN), the Internet, mobile telephone networks, plain old telephone (POTS) networks, and wireless data networks (e.g., Wi-Fi and Wi-Max networks). A transmission medium includes any intangible medium that is capable of storing, encoding, or carrying instructions 524 for execution by the machine, and includes digital or analog communications signals or other intangible media to facilitate communication of such software.

It should be noted that the description and the figures above merely illustrate the principles of the present subject matter, along with examples described herein, and should not be construed as a limitation to the present subject matter. It is thus understood that various arrangements may be devised that, although not explicitly described or shown herein, embody the principles of the present subject matter. Moreover, all statements herein reciting principles, aspects, and implementations of the present subject matter, as well as specific examples thereof, are intended to encompass equivalents thereof.

It is to be understood that not necessarily all objects or improvements may be achieved in accordance with any particular example described herein. Thus, for example, those skilled in the art will recognize that some examples may be operated in a manner that achieves or optimizes one characteristic or group of characteristics as taught herein without necessarily achieving other objects or characteristics as may be taught or suggested herein.

All of the processes described herein may be embodied in, and fully automated via, software code modules executed by a computing system that includes computers or processors. The code modules may be stored in any type of non-transitory computer-readable medium or other computer storage device. Some or all of the methods may be embodied in specialized computer hardware.

Many other variations than those described herein will be apparent from this disclosure. For example, depending on the example, some acts, events, or functions of any of the algorithms described herein can be performed in a different sequence, can be added, merged, or left out altogether (for example, not all described acts or events are necessary for the practice of the algorithms). Moreover, in some examples, acts or events can be performed concurrently, for example, through multi-threaded processing, interrupt processing, or multiple processors or processor cores, or on other parallel architectures, rather than sequentially. In addition, different tasks or processes can be performed by different machines and/or computing systems that can function together.

The various illustrative logical blocks and modules described in connection with the examples disclosed herein can be implemented or performed by a machine, such as a processing unit or processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A processor can be a microprocessor, a controller, a microcontroller, a state machine, a combination of the same, or the like. A processor can include electrical circuitry to process computer-executable instructions. In some examples, a processor includes an FPGA or other programmable device that performs logic operations without processing computer-executable instructions. A processor can also be implemented as a combination of computing devices, for example, a combination of a DSP and a microprocessor, a plurality of microprocessors, microprocessors in conjunction with a DSP core, or any other such configuration.

Although described herein primarily with respect to digital technology, a processor may also include primarily analog components. A computing environment can include any type of computer system, including, but not limited to, a computer system based on a microprocessor, a mainframe computer, a digital signal processor, a portable computing device, a device controller, or a computational engine within an appliance, to name a few. The elements of a method, process, routine, or algorithm described in connection with the examples disclosed herein can be embodied directly in hardware, in a software module executed by a processor device, or in a combination of the two. A software module can reside in RAM memory, flash memory, ROM memory, EPROM memory, EEPROM memory, registers, hard disk, a removable disk, a CD-ROM, or any other form of non-transitory computer-readable storage medium. An example storage medium can be coupled to the processor device so that the processor device can read information from and write information to the storage medium. In some examples, the storage medium can be integral to the processor device. The processor device and the storage medium can reside in an ASIC. The ASIC can reside in a user terminal. In some examples, the processor device and the storage medium can reside as discrete components in a user terminal.

The processes described herein or illustrated in the figures of the present disclosure may begin in response to an event, such as on a predetermined or dynamically determined schedule, on demand when initiated by a user or system administrator, or in response to some other event. When such processes are initiated, a set of executable program instructions stored on one or more non-transitory computer-readable media (e.g., hard drive, flash memory, removable media, etc.) may be loaded into memory (e.g., RAM) of a server or other computing device. The executable instructions may then be executed by a hardware-based computer processor of the computing device. In some examples, such processes or portions thereof may be implemented on multiple computing devices and/or multiple processors, serially or in parallel.

Although the described flow diagrams herein can show operations as a sequential process, many of the operations can be performed in parallel or concurrently. In addition, the order of the operations may be re-arranged. A process is terminated when its operations are completed. A process may correspond to a method, a procedure, an algorithm, etc. The operations of methods may be performed in whole or in part, may be performed in conjunction with some or all of the operations in other methods, and may be performed by any number of different systems, such as the systems described herein, or any portion thereof, such as a processor included in any of the systems.

Conditional language, such as, among others, "can," "could," "might," or "may," unless specifically stated otherwise, is otherwise understood within the context as used in general to convey that some examples include, while other examples do not include, some features, elements, and/or steps. Disjunctive language, such as the phrase "at least one of X, Y, or Z," unless specifically stated otherwise, is otherwise understood within the context as used in general to present that an item, term, etc., may be either X, Y, or Z, or any combination thereof (for example, X, Y, and/or Z). Thus, such disjunctive language is not generally intended to, and should not, imply that some examples require at least one of X, at least one of Y, or at least one of Z to each be present.

Any process descriptions, elements, or blocks in the flow diagrams described herein and/or depicted in the attached figures should be understood as potentially representing modules, segments, or portions of code that include executable instructions for implementing specific logical functions or elements in the process. Alternate examples are included within the scope of the examples described herein, in which elements or functions may be deleted, executed out of order from that shown, or discussed, including substantially, concurrently, or in reverse order, depending on the functionality involved, as would be understood by those skilled in the art.

It should be emphasized that many variations and modifications may be made to the above-described examples, the elements of which are to be understood as being among other acceptable examples. All such modifications and variations are intended to be included herein within the scope of this disclosure.

Any process descriptions, elements, or blocks in the flow diagrams described herein and/or depicted in the attached figures should be understood as potentially representing modules, segments, or portions of code that include executable instructions for implementing specific logical functions or elements in the process. Alternate implementations are included within the scope of the examples described herein, in which elements or functions may be deleted, executed out of order from that shown, or discussed, including substantially concurrently or in reverse order, depending on the functionality involved, as would be understood by those skilled in the art.

Unless otherwise explicitly stated, articles, such as "a" or "an," should generally be interpreted to include one or more described items. Accordingly, phrases, such as "a device configured to," are intended to include one or more recited devices. Such one or more recited devices can also be collectively configured to carry out the stated recitations. For example, "a processor configured to carry out recitations A, B, and C" can include a first processor configured to carry out recitation A, working in conjunction with a second processor configured to carry out recitations B and C.

It will also be appreciated that one or more of the elements depicted in the drawings/figures can also be implemented in a more separated or integrated manner, or even removed or rendered as inoperable in certain cases, as is useful in accordance with a particular application.

Further examples are set out in the clauses below:
1. A system for pre-stretching film, comprising:
   a starting cylindrical roll configured to supply a film;
   a first intermediate roller positioned between the starting cylindrical roll and a final non-cylindrical roll, the first intermediate roller configured to receive the film from the starting cylindrical roll, the first intermediate roller having a first intermediate curvature radius greater than a final curvature radius of the final non-cylindrical roll; and
   the final non-cylindrical roll configured to receive the film.
2. The system of clause 1, further comprising:
   a second intermediate roller positioned between the first intermediate roller and the final non-cylindrical roll, the second intermediate roller configured to receive the film from the first intermediate roller, the second intermediate roller having a second intermediate curvature radius greater than the final curvature radius of the final non-cylindrical roll and less than the first intermediate curvature radius.
3. The system of any one of the preceding clauses, further comprising:
   a heating element within the first intermediate roller configured to heat the film as it passes over the first intermediate roller.
4. The system of any one of the preceding clauses, further comprising:
   one or more heating elements configured to heat the starting cylindrical roll, the first intermediate roller, and the final non-cylindrical roll.
5. The system of any one of the preceding clauses, wherein the starting cylindrical roll stores the film in an unstretched condition and is non-destructively detachable from the system, and wherein the final non-cylindrical roll stores the film in a pre-stretched condition and is non-destructively detachable from the system.
6. The system of any one of the preceding clauses, wherein the final non-cylindrical roll is interchangeable with other non-cylindrical rolls having different final curvature radii and the first intermediate roller is interchangeable with other intermediate rollers having different intermediate curvature radii less than the final curvature radius.
7. The system of any one of the preceding clauses, wherein the final non-cylindrical roll has a curvature radius based on a target curvature of a target surface to which the film is to be applied.
8. The system of any one of the preceding clauses, further comprising:
   a controller configured to select the first intermediate roller from a set of intermediate rollers of different curvature radii, the first intermediate roller selected based on a target curvature.
9. The system of clause 8, further comprising:
   a controller configured to add a second intermediate roller from the set of intermediate rollers to the system, the second intermediate roller added based on the target curvature.
10. The system of any one of the preceding clauses, wherein the film stored on the final non-cylindrical roll is applicable to a curved surface without application of heat.
11. A method for pre-stretching film comprising:
   supplying a film from a starting cylindrical roll;
   passing the film from the starting cylindrical roll to a first intermediate roller positioned between the starting cylindrical roll and a final non-cylindrical roll, the first intermediate roller having a first intermediate curvature radius greater than a final curvature radius of the final non-cylindrical roll;
   stretching the film using the first intermediate roller; and
   storing the film on the final non-cylindrical roll.
12. The method of clause 11, further comprising:
   passing the film from the first intermediate roller to a second intermediate roller positioned between the first intermediate roller and the final non-cylindrical roll, the second intermediate roller having a second intermediate curvature radius greater than the final curvature radius of the final non-cylindrical roll and less than the first intermediate curvature radius of the first intermediate roller.
13. The method of clause 11 or 12, further comprising:
   heating at least one of: the starting cylindrical roll, the first intermediate roller, and the final non-cylindrical roll.
14. The method of any one of clauses 11-13, further comprising:
   removing the final non-cylindrical roll with the film stored thereon; and
   attaching a new non-cylindrical roll, the new non-cylindrical roll having a curvature radius of the final curvature radius.
15. The method of any one of clauses 11-14, further comprising:
   removing the starting cylindrical roll subsequent to completely passing the film to the first intermediate roller; and
   attaching a new cylindrical roll with a new film stored thereon.
16. The method of any one of clauses 11-15, further comprising:
   selecting the first intermediate roller from a set of intermediate rollers with the first intermediate curvature radius based on a target curvature.
17. The method of clause 16, further comprising:
   selecting a second intermediate roller from the set of intermediate rollers with a second intermediate curvature radius based on the target curvature; and
   passing the film from the first intermediate roller to the second intermediate roller.
18. The method of any one of clauses 11-17, further comprising:
   selecting the final non-cylindrical roll based on a target curvature of a curved surface to which the film is to be applied.
19. The method of any one of clauses 11-18, further comprising:
   applying the film to a curved surface without application of heat.
20. A pre-stretched roll of film stored on a non-cylindrical roll, wherein:
   the film is supplied by a cylindrical roll, and
   the film is stretched by an intermediate roller with an intermediate curvature less than a curvature of the non-cylindrical roll.

## Claims

1. A system for pre-stretching film, comprising:
a starting cylindrical roll configured to supply a film;
a first intermediate roller positioned between the starting cylindrical roll and a final non-cylindrical roll, the first intermediate roller configured to receive the film from the starting cylindrical roll, the first intermediate roller having a first intermediate curvature radius greater than a final curvature radius of the final non-cylindrical roll; and
the final non-cylindrical roll configured to receive the film.

2. The system of claim 1, further comprising:
a second intermediate roller positioned between the first intermediate roller and the final non-cylindrical roll, the second intermediate roller configured to receive the film from the first intermediate roller, the second intermediate roller having a second intermediate curvature radius greater than the final curvature radius of the final non-cylindrical roll and less than the first intermediate curvature radius.

3. The system of claim 1, further comprising:
a heating element within the first intermediate roller configured to heat the film as it passes over the first intermediate roller.

4. The system of claim 1, further comprising:
one or more heating elements configured to heat the starting cylindrical roll, the first intermediate roller, and the final non-cylindrical roll.

5. The system of claim 1, wherein the starting cylindrical roll stores the film in an unstretched condition and is non-destructively detachable from the system, and wherein the final non-cylindrical roll stores the film in a pre-stretched condition and is non-destructively detachable from the system.

6. The system of claim 1, wherein the final non-cylindrical roll is interchangeable with other non-cylindrical rolls having different final curvature radii and the first intermediate roller is interchangeable with other intermediate rollers having different intermediate curvature radii less than the final curvature radius.

7. The system of claim 1, wherein the final non-cylindrical roll has a curvature radius based on a target curvature of a target surface to which the film is to be applied.

8. The system of claim 1, further comprising:
a controller configured to select the first intermediate roller from a set of intermediate rollers of different curvature radii, the first intermediate roller selected based on a target curvature; and optionally further comprising:
a controller configured to add a second intermediate roller from the set of intermediate rollers to the system, the second intermediate roller added based on the target curvature.

9. The system of claim 1, wherein the film stored on the final non-cylindrical roll is applicable to a curved surface without application of heat.

10. A method for pre-stretching film comprising:
supplying a film from a starting cylindrical roll;
passing the film from the starting cylindrical roll to a first intermediate roller positioned between the starting cylindrical roll and a final non-cylindrical roll, the first intermediate roller having a first intermediate curvature radius greater than a final curvature radius of the final non-cylindrical roll;
stretching the film using the first intermediate roller; and
storing the film on the final non-cylindrical roll.

11. The method of claim 10, further comprising:
passing the film from the first intermediate roller to a second intermediate roller positioned between the first intermediate roller and the final non-cylindrical roll, the second intermediate roller having a second intermediate curvature radius greater than the final curvature radius of the final non-cylindrical roll and less than the first intermediate curvature radius of the first intermediate roller; or optionally further comprising:
heating at least one of: the starting cylindrical roll, the first intermediate roller, and the final non-cylindrical roll.

12. The method of claim 10, further comprising:
removing the final non-cylindrical roll with the film stored thereon; and
attaching a new non-cylindrical roll, the new non-cylindrical roll having a curvature radius of the final curvature radius; or optionally further comprising:
removing the starting cylindrical roll subsequent to completely passing the film to the first intermediate roller; and
attaching a new cylindrical roll with a new film stored thereon.

13. The method of claim 10, further comprising:
selecting the first intermediate roller from a set of intermediate rollers with the first intermediate curvature radius based on a target curvature; and optionally further comprising:
selecting a second intermediate roller from the set of intermediate rollers with a second intermediate curvature radius based on the target curvature; and
passing the film from the first intermediate roller to the second intermediate roller.

14. The method of claim 10, further comprising:
selecting the final non-cylindrical roll based on a target curvature of a curved surface to which the film is to be applied; or optionally further comprising:
applying the film to a curved surface without application of heat.

15. A pre-stretched roll of film stored on a non-cylindrical roll, wherein:
the film is supplied by a cylindrical roll, and
the film is stretched by an intermediate roller with an intermediate curvature less than a curvature of the non-cylindrical roll.
